# EUROPEAN PATENT SPECIFICATION

(11) **EP 2 219 395 B1**
(45) Date of publication and mention of the grant of the patent: **16.04.2014**
(21) Application number: 10164840.0
(22) Date of filing: 23.08.2001
(51) Int. Cl.: H04W 4/02, H04W 48/18, H04W 88/06, H04W 88/10

(54) **System and method for redirecting data to a wireless device over a plurality of communication paths**
System und Verfahren zum Weiterleiten von Daten zu einem drahtlosen Gerät über mehrere Kommunikationspfade
Système et procédé pour rediriger des données vers un dispositif sans fil sur une pluralité de voies de communication

(30) Priority: 25.08.2000 US 227947 P; 13.02.2001 US 782380
(43) Date of publication of application: 18.08.2010
(62) Divisional of application: 01964788.2
(73) Proprietor: BlackBerry Limited, Waterloo, ON N2K 0A7 (CA)
(72) Inventor: Mousseau, Gary, P., Waterloo Ontario N2L 6M5 (CA); Edmonson, Peter J., Hamilton Ontario L9B 1A9 (CA); Lazaridis, Mihal, Waterloo Ontario N2T 1K1 (CA)
(74) Representative: Moore, Barry

(56) References cited:
- WO-A2-99/45684
- WO-A2-99/63709
- US-A- 5 210 785

## Description

### BACKGROUND

### 1. Field of the Invention

The present invention is directed toward the field of data communications using a mobile device. More specifically, the invention relates to the art of redirecting data to a mobile device having a wireless interface capable of communicating over a plurality of communication paths.

### 2. Description of the Related Art

Systems and methods for replicating data from a host system, such as a desktop computer system or a network server, to a user's mobile device are known. These systems typically employ "synchronization" schemes in which the user's data is warehoused (or stored) at the host system for an indefinite period of time and then is transmitted in bulk only in response to a user request. In order to replicate the stored data, the user typically places their mobile device in an interface cradle that is electrically connected to the host system, and then executes a command, either at the mobile device or the host system, to begin replication. These known techniques employ a "pull" paradigm that requires the user to take affirmative steps to obtain data from the host system. The only point in time at which the host system and the mobile device are truly "synchronized," is at the moment of replication. Several minutes, or even seconds later, a new data item could arrive at the host system (or the mobile device), but this new data item will only be synchronized at the next instance of the replication command being executed.

Systems for redirecting phone calls, or aggregating phone numbers into one phone number, are also known. These systems require the user to manually reconfigure an aggregating phone switch using a plurality of phone numbers so that calls are routed to a new location. Also known are systems that track the number of rings on a given phone number and re-route the call to another number after a set number of unanswered ring signals. In this type of system, special voice messages are sometimes presented to the user asking them to wait while the call is re-routed. Oftentimes the caller will hang up in response to such a message rather than waiting for additional ring signals on another phone number.

Another known type of system for communicating data to mobile devices is the original paging-based system. This type of system uses a small device on the belt that can display a phone number to call in case of emergencies. These systems were typically offered as third-party services that were remote to a company's facilities, and did not relate to communicating the company's private, secure data to mobile users. Advanced versions of these paging systems can transmit an alphanumeric message or even a simple E-mail message limited to about 170 characters or less. To use these systems, the user must accept a second E-mail address, a second phone number, or a contact number and sometimes a third number called a Personal Identification Number (PIN) to communicate with the paging device. These systems also do not provide robust security and privacy, which is a major concern when transmitting sensitive corporate data outside the corporate network.

US patent no. 5,210,785 relates to a wireless communication system which comprises a plurality of wireless communication units having different communication protocols. A wireless communication unit is automatically selected from the plurality of wireless units in accordance with the operation states of the plurality of wireless units.

WO0035210 describes a system in which a wireless network provides multiple communications services, each controlled by a separate controller. US6055426 describes a system providing communication via a cellular network or data communication network - here a satellite network.

### SUMMARY

The present teaching relates to a method as detailed in claim 1. The teaching also relates to a system as detailed in claim 5. Additionally, the teaching relates to a redirector software application as detailed in claim 9. Advantageous, embodiments are provided in the subsidiary claims.

### BRIEF DESCRIPTION

FIG. 1 is a system diagram showing data items being redirected from a host system operating at a user's desktop computer to a mobile device over a plurality of communication paths;
FIG. 2 is a system diagram showing data items being redirected from a host system operating at a network server to a mobile device over a plurality of communication paths;
FIG. 3 is a logical flow chart showing how a shared secret can be securely exchanged in the system shown in FIGs. 1-2;
FIG. 4 is a bottom perspective view of an exemplary mobile device having a first wireless component wearable on the user's belt and a second wireless component for insertion in the user's ear;
FIG. 5 is another bottom perspective view of the exemplary mobile device shown in FIG. 4, in which the second wireless component has been removed from the first wireless component;
FIG. 6 is a schematic of the second wireless component of the exemplary mobile device shown in FIG. 4;
FIG. 7 is an electrical block diagram of the exemplary mobile device shown in FIGs. 4-6;
FIG. 8 depicts a first user of a mobile device such as shown in FIGs. 4-7 communicating via a first communication path comprising a short range wireless link, and a second user having a mobile device such as shown in FIGs. 4-7 communicating via a second communication path comprising a long range wireless link;
FIG. 9 expands upon FIG. 8, and shows the users moving throughout an office environment and into an environment beyond the office;
FIG. 10 also expands upon FIG. 8, and shows the users moving through a first office environment and into a second, related office environment at a different physical location from the first office environment;
FIG. 11 is a logical flow diagram depicting a series of exemplary steps executed by a redirector application operating at a host system for determining which communication path should be used for routing data items to a particular mobile device; and
FIG. 12 is a logical flow diagram depicting a series of exemplary steps executed by a redirector application operating at a host system for determining which communication path should be used for routing data items to a particular mobile device within a corporate environment having a plurality of office locations.

### DETAILED DESCRIPTION

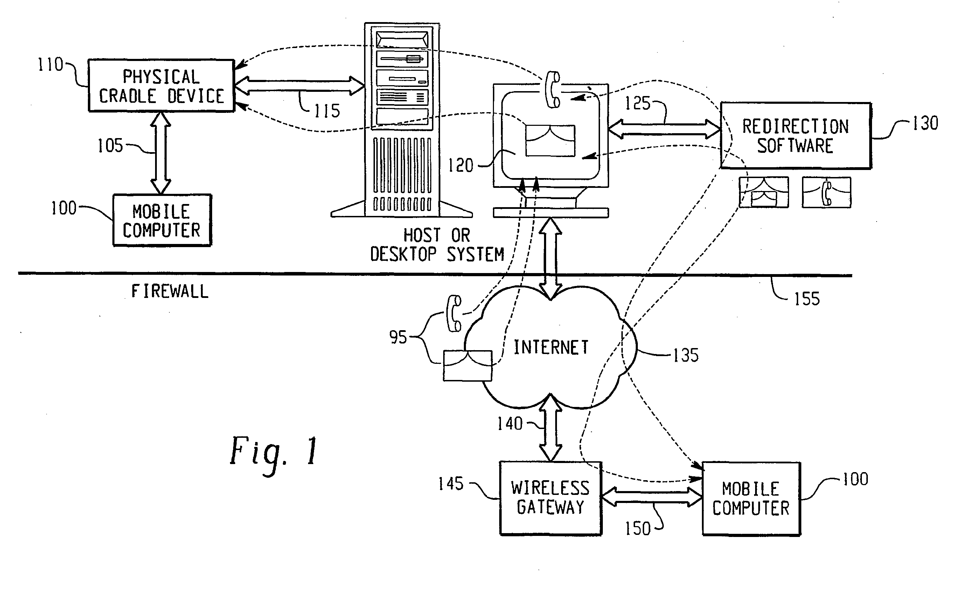

Referring now to the drawing figures, FIG. 1 is a system diagram showing data items 95 being redirected from a host system 120 operating at a user's desktop computer to a mobile device 100 over a plurality of communication paths. In addition to the mobile device 100 and the host system 120, the system includes one or more RF-enabled interface cradles 110, a wide area network 135, a redirector application 130, a wireless gateway 145, and a wireless network 150.

FIG. 1 shows two possible communication paths for redirecting the data items to the mobile device 100. In a first path, the redirector application 130 is in communication with the mobile device 100 via a long-range wireless network comprising a wide area network 135, a wireless gateway 145, and a wireless network 150. The long-range wireless communications path could be, for example, the Mobitex Radio Network ("Mobitex"), the DataTAC Radio Network ("DataTAC"), the Code Division Multiple Access (CDMA) network, the Groupe Special Mobile or the Global System for Mobile Communications (GSM) and the General Packet Radio Service (GPRS), or the future third-generation (3G) networks like UMTS, EDGE and W-CDMA.

In a second path, the redirector application 130 is in communication with the mobile device 100 via a short-range wireless network comprising interface 115, and interface cradle 110, which is preferably equipped with a short-range wireless RF transceiver. The short-range wireless interface could be, for example, a Bluetooth interface, or any other type of short-range RF interface. The interface cradle 110 can communicate with the mobile device in two ways. First, by physically and electrically connecting the mobile device 100 to the cradle 110. Second, by communicating short-range wireless signals between the wireless RF transceiver of the cradle 110 and a short-range wireless transceiver in the mobile device 100.

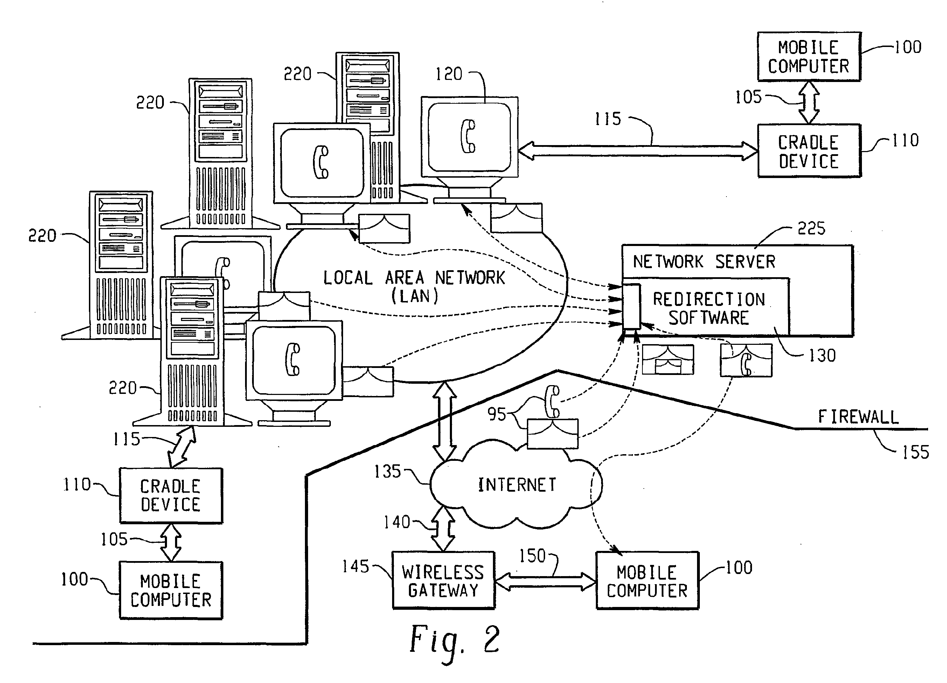

FIG. 2 is a system diagram showing data items 95 being redirected from a host system 120 operating at a network server 225 to a plurality of mobile devices 100 over a plurality of communication paths. The host system could be a desktop system, a network server, and Internet Service Provider (ISP), a phone switch, a mail router or storage area, an information database, or some other type of primary data center. The host system 120/225 operates as a storage/redirection facility for holding the mobile user's data, and for redirecting the data to the user's mobile device. The host system 120/225 is preferably located behind a corporate firewall 155, which acts as a privacy barrier for protecting sensitive corporate information. The host system can also be directly coupled to the redirector software 130 so that they act as one program. In this embodiment the host system 120 is said to be "wirelessly enabled" by the redirector software 130. This co-operative relationship between the redirection software and the messaging system can be used to wirelessly enable any messaging system. Commonly used messaging systems include Microsoft's™ 'Exchange' e-mail system, IBM's™ Lotus Notes message system and the Internet standard IMAP4 message system.

FIG. 2 is similar to FIG. 1, except that the network server implementation enables a single redirector application 130 to service a plurality of users by receiving data items from a plurality of sources and then by redirecting those data items to a plurality of users. Although a single redirector application 130 is shown in FIGs. 1 and 2, the system can be expanded for use with multiple redirector applications 130.

The redirector application 130 preferably operates on the host system 120, although it could operate on some other system and be in communication with the host system 120 through a network connection. It receives, processes, stores, filters, and redirects data items from the host system 120 to the mobile device 100. The redirector 130 also functions to determine the best communication path over which the data items should be redirected. This determination is based on information collected and stored at the redirector 130 (or accessible by the redirector application) that identifies the approximate physical location of the mobile device user. The redirection program 130 is an event-driven program, operating at the host system 120, which, upon sensing a particular user-defined event has occurred, redirects user-selected data items from the host system to the user's mobile device 100. The redirector program 130 also interfaces to components that can detect the physical location of the user and track the least congested path, shortest path or best propagation path to redirect the user's information. The information can comprise data messages, phone items, video items or any digital or analog information that might be delivered to a user's host system 120. For matter of clarity the term data items will refer to all forms of information to be sent to the user including data, voice, video and other digital information. For a matter of brevity, the term "host system" includes but is not limited to either a standalone desktop computer connected to a LAN, a fixed facility like an ISP's service offering, or a networked computer terminal connected to a server and/or an Internet appliance connected to the Internet or Intranet.

For example, in the network implementation shown in FIG. 2, as a mobile user moves within physical proximity to one of the RF-enabled interface cradles 110, information is sent to the redirector application 130 identifying the mobile device 100 and the network address of the interface cradle 110. Using this information, the redirector application 130 will redirect any incoming or altered data items over the LAN (or other network) to the interface cradle 110 and then to the mobile device via a short-range RF communication path. Once the mobile user moves away from the interface cradle 110, additional information is sent to the redirector application 130 indicating that the user is no longer in physical proximity to the particular cradle 110. The redirector 130 will then redirect any data items to the mobile device 100 over the long-range RF communication path 135, 145, 150 until such time as the mobile user moves within close physical proximity to another interface cradle 110.

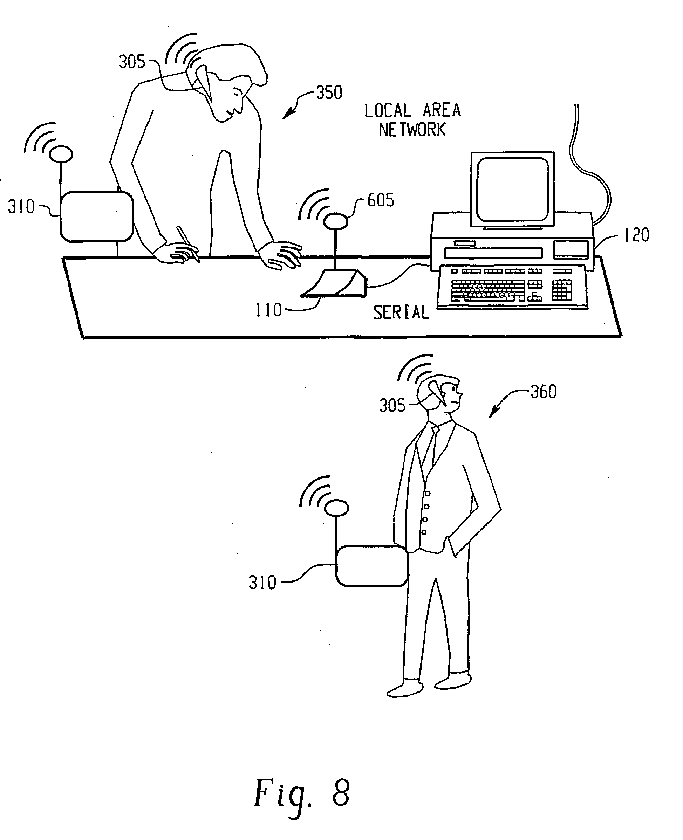

A mobile user communicating with this system may have multiple offices in which the user may work from, including a home-based office, a plurality of cubical offices in a plurality of office buildings, a workstation at a remote office space, etc. As the mobile user moves into and out of his home office and the other offices, a wireless communication path between the mobile device 100 and the host system 120 is either established or broken. As the mobile user breaks contact with his home office's physical space (and hence the mobile device 100 breaks contact with an interface cradle 110 at the home office), the redirector program 130 begins to route data, e-mail, voice calls, video calls, etc., and all other direct communications to the mobile device 100 over the long-range wireless network 135, 140, 145. In another embodiment each business office is made up of 'cells' called pico-cells 110 & 605 in this application, shown in detail in figure 8. As the user roams within the office, he is preferably re-connected to whichever short-range pico-cell 100 & 605 is located closest to him. In this manner, voice and data may be routed within the corporate firewall 155 and LAN space wirelessly to whichever office or cell a given user is currently located in. Advantageously, this system provides higher-bandwidth, cost effectiveness, rapid delivery of information redirected from the home office. So as a user walked around, having meetings and mini-conferences, all his phone calls, data messages and e-mail message would also take the shortest path to the user within the company's building. Only if the user left the physical proximity of the companies building, or the coverage within the building is insufficient, would the long-range, wide area wireless network have to be used.

It should be understood that the terms "office" and "office environment," as used herein, may refer to any enclosed or partially enclosed location, and are not limited to places in which business is conducted. The term office environment implies a relationship between the user and the host system 120. In most businesses today this relationship is defined by the installation of a firewall 155 around the corporate LAN environment that acts as a privacy barrier for information of all kinds. Advantageously, the invention supports this secure relationship created by the company's firewall 155 and allows information to be routed security to the user without comprising corporate security. The firewall helps to define the relationship between an individual and his corporate data.

Alternatively, the redirector application 130 may be provided with real-time information regarding the quality of the various communication paths to the mobile user, and can use this quality information to determine the best communication path for redirecting the data items. For example, even though the user may have come within close physical proximity to one of the interface cradles 110, the link between the redirector application 130 and the interface cradle 110 may have degraded in quality because of network congestion. In this situation, the redirector 130 would revert to the long-range wireless network 135, 145, 150 in order to redirect information to the mobile device 100. In another example situation, the mobile user is within close physical proximity of two RF-enabled interface cradles 110, but one is less congested then the other (i.e., less mobile users are communicating with one of the cradles than the other). In this situation, the redirector application 130 may determine that the best communication path to the mobile user is through the least congested interface cradle, and will then redirect the data accordingly.

Using the redirector program, the user can select certain data items for redirection, such as phone calls, e-mail messages, calendar events, meeting notifications, address entries, journal entries, personal reminders, etc. As new data item types are added to the system, the user may add these new data item types to a personal preference list maintained by the redirector 130. The user can review a list of items that could be redirected to his or her mobile device, and select those data item types that the user desires for redirection. Having selected the data items for redirection, the user can then configure one or more event triggers to be sensed by the redirector program and to initiate redirection of the user data items. These user-defined trigger points (or event triggers) may include external events, internal events and networked events.

Examples of external events include: receiving a message from the user's mobile data communication device to begin redirection; receiving a similar message from some external computer; sensing that the user is no longer in the vicinity of the desktop computer via the short-range RF link to the cradle; or any other event that is external to the host system. Internal events could be a calendar alarm, screen saver activation, keyboard timeout, programmable timer, or any other user-defined event that is internal to the desktop computer. Networked events are user-defined messages that are transmitted to the host system from another computer coupled to the host system via a network to initiate redirection.

An exemplary redirector application for use with this system is described in more detail in United States Patent No. 6,219,694, entitled "System and Method for Pushing Information from a Host System to a Mobile Data Communication Device," which is commonly assigned with the present application.

The systems shown in FIGs. 1-2 preferably operate as follows. As data items 95 reach the desktop 120 (or network server 225) they are processed by the redirection software 130. The redirection software 130 is preferably operating either within the desktop system 120 or as part of the network server 225. The redirector software 130 determines the best communication path for reaching a particular user associated with an incoming data item and then routes the data item 95 over the best communication path. This determination step can take many forms. In a preferred form, the redirector software 130 maintains a database entry for each mobile device 100 indicating whether the mobile device 100 is currently in the vicinity of an interface cradle 110 having an RF wireless interface, and the network address of that interface cradle 110. If a particular mobile device is within the vicinity of such an interface cradle 110, then the redirector 130 processes and transmits the data item 95 over the LAN (in the example of FIG. 2) or directly to the cradle 110 (in the example of FIG. 1), which then transmits the data item 95 over its short-range RF link to the mobile device 100. If, however, the mobile device 100 is not within the vicinity of any such interface cradle 110, then the redirector application 130 routes the data item over the long-range wireless network 135, 145, 150 to the mobile device 100.

Preferably, when a user of a mobile device 100 comes within the physical proximity of an interface cradle 110 having a short-range RF link, the mobile device 100 transmits a contact message to the cradle 110. This message contact is then processed and contact information is provided to the redirector application 130 indicating that the mobile device 100 is now within the physical proximity of the particular cradle 110. Then, when the mobile device 100 leaves the physical proximity of the particular cradle 100, the cradle 100 senses the lack of communication from the mobile device 100, and notifies the redirector application 130 that the mobile device 100 is no longer in the proximity of the cradle 110. In this manner, the redirector application 130 can determine the approximate physical location of the mobile device 100.

Other exemplary methods of determining the approximate physical location of the mobile device 100 (and hence the user) include: (1) detecting the physical presence of the mobile device 100 in the physical serial cradle 110, (2) detecting the activation of a screen saver program associated with the desktop host system, (3) using heat sensors to determine whether the user has left the area of the host system, (4) using a visual image detector to determine whether the user is not present, or (5) receiving a direct command from the user to redirect information in a certain way. In each of these cases, the redirector application 130 is provided with information that it uses to determine the best communication path for redirecting data to the mobile device 100.

In the case of the network server 225 in FIG. 2, there is an additional step of determining which network workstation 220 received the data item 95. This additional step is necessary in order to associate the data item 95 to a particular mobile device 100. This can be done through special addressing, such as the 'To Address' in an E-mail message, or it can be done using a phone extension for an incoming phone call.

In one embodiment, described in more detail below, the mobile device 100 can be configured with a plurality of wirelessly-enabled components, including (1) a first component 310 for data storage, retrieval, and long-range RF communication, and (2) a second component 305 for audio input/output and short-range RF communication. Alternatively, a short-range RF transceiver may be included in both the first component 310 and the second component 305. The second component 305 is preferably a detachable ear-piece, which is placed in the ear of the user. This second component 305 may communicate directly with the interface cradle 110 via the short-range RF communication link, or it may communicate with the first component 310, which then communicates with the interface cradle 110. The first component 310 is preferably positioned in a device holster attached to the user's belt.

Using this multi-transceiver mobile device 100, if the user is in the same room (or within close physical proximity) as one of the RF-enabled interface cradles 110, then the data items 95 are redirected from the interface cradle 110 either directly to the ear-piece component 305 or to the first component 310. For example, the system may be configured such that voice information, like voice messages or real-time voice calls, are redirected directly to the ear-piece component 305, while data information, such as E-mails, files, or other types of digital data, are redirected to the belt-worn first component 310. In this manner, information is redirected directly to the user with no manual intervention with the desktop computer system 120.

As described above, the host system 120/225 is preferably located behind a corporate firewall system that protects a company's sensitive corporate data. The system described herein operates in conjunction with the company's existing security mechanisms (including the firewall system) by extending an already secure desktop/corporate environment to cover wireless mobile devices. This security takes places through the exchange of a shared secret (such as a public key for encrypted/decrypting data) between the mobile device 100 and the host system 120/225, preferably through the RF-enabled interface cradle 110. This operation effectively extends the corporate firewall around the mobile device 100, thereby creating a virtual private wireless network (VPWN).

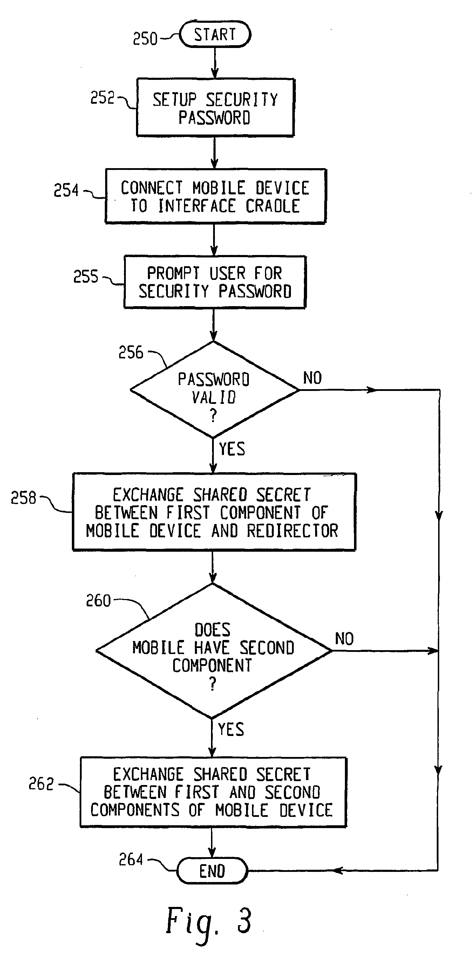

FIG. 3 is a logical flow chart showing how a shared secret can be securely exchanged between a mobile device 100 and a redirector application 130 in the system shown in FIGs. 1-2. The method begins at 250. In step 252, the user configures a security password, which is stored in conjunction with the redirector application 130. When the user is ready to exchange the shared secret, the user places the mobile device 100 in electrical and physical contact 254 with the interface cradle 110. The user is then prompted 255 to enter a security password into the mobile device (or into a desktop system coupled to the interface cradle 110). If the security password is not valid, then the method ends at 264. If, however, the security password is valid, then at step 258 the shared secret is exchanged and stored at the redirector application 130 and within the mobile device 100. This shared secret can then be used by the redirector 130 to encrypt data prior to redirection, and also by the mobile device 100 to decrypt the encrypted data. Similarly, the shared secret can be used to encrypt reply information at the mobile device 100 and to decrypt the encrypted reply information at the redirector 130. At step 260, the method then determines whether the particular mobile device 100 has two wireless components, such as the device mentioned above and described in more detail below. If the mobile device 100 does not have two wireless components, then the method ends 264. If, however, the mobile device 100 includes at least two wireless components, then at step 262 the same (or some other) shared secret is then exchanged between the first component 310 of the mobile device 100 and the second component 305 of the mobile device 100. In this manner, a secure, end-to-end connection can be established between the redirector application 130 and the mobile device 100, including a second wireless component 305 of the mobile device 100.

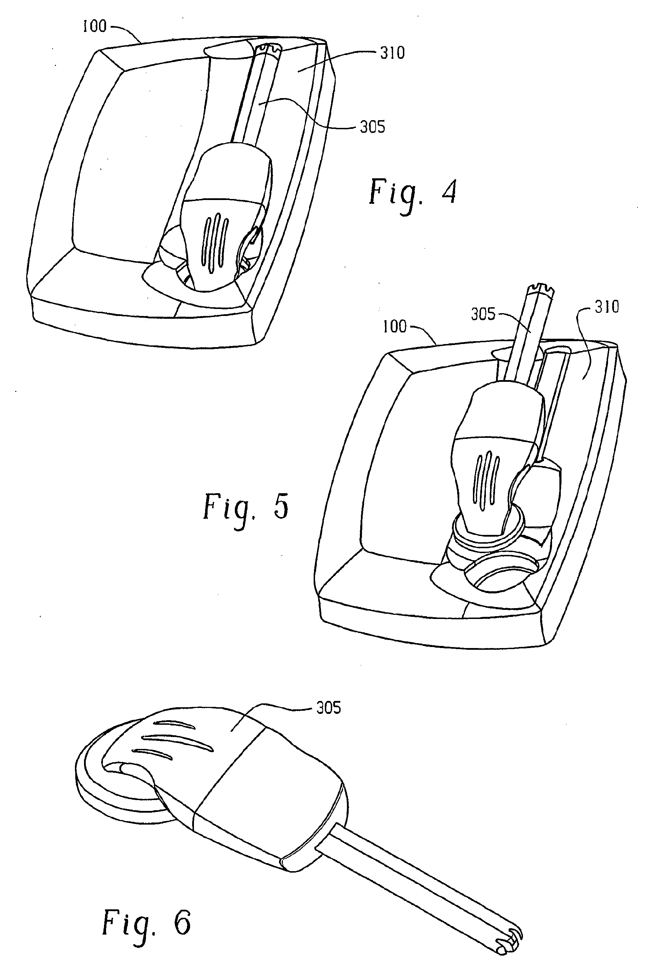

FIG. 4 is a bottom perspective view of an exemplary mobile device 100 having a first wireless component 310 wearable on the user's belt and a second wireless component 305 for insertion in the user's ear. FIG. 5 is another bottom perspective view of the exemplary mobile device 100 shown in FIG. 4, in which the second wireless component 305 has been removed from the first wireless component 310. FIG. 6 provides a closer image of how the ear-piece or ear-bud 305 can be removed from the belt-worn component 310. This clip-in component 305 can be removed easily and placed into the user's ear. Once removed, the RF transceiver of the ear-piece 305 is preferably automatically activated (by sensing that it is no longer in electrical contact with the first component 310), enabling voice calls to be directly (or indirectly) received by this component 305. When the ear-piece 305 is snapped back into its compartment within the belt-worn component 310, the RF transceiver in the ear-piece 305 is preferably disabled. This automatic shutdown of the ear-piece transceiver provides a method for holding all calls and sending them directly to voice mail. When the first component 310 senses that the ear-piece 305 is in the compartment, it will respond to any incoming voice calls 95 by sending a message back to the redirector 120 that indicates the call cannot be accepted and that it should be routed into the user's voice mail system.

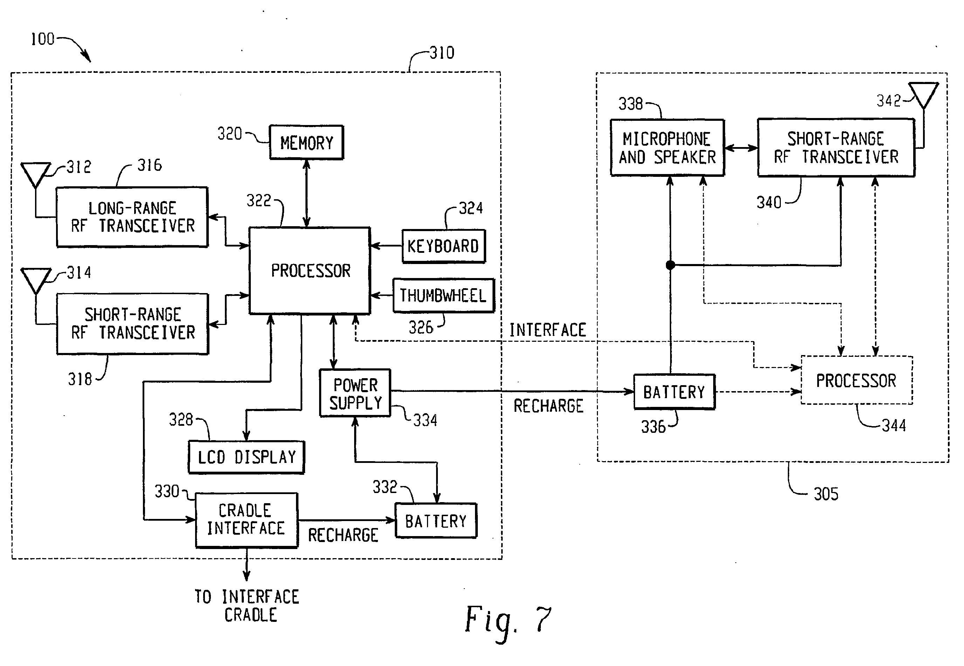

FIG. 7 is an electrical block diagram of the exemplary mobile device 100 shown in FIGs. 4-6. FIGs. 4-7 describe an exemplary type of mobile device 100 that may be used with the system described herein. Another type of mobile device that could be modified for use with this system is described in co-pending United States Patent Applications S/N 09/106,585, 09/344,432, 09/543,231, 09/634,774 and 09/663,972. These applications, are co-owned with the present application. The mobile device described in these applications includes only a single wireless RF component for communicating over a single communication path to a long-range wireless network. The device shown in FIG. 4-7 is similar to these devices in that it can communicate over a long-range wireless network, but also includes an RF interface for communicating over a short-range wireless network. This shortrange wireless interface is preferably implemented in both the first and second components 310, 305, so that the first component 310 can communicate with the second component 305 over the short-range interface, and also both the first and second components 305, 310 can communicate with the one or more RF-enabled interface cradles 110.

The mobile device 100 shown in FIGs. 4-7 preferably comprises a first RF-enabled component 310 and a second RF-enabled component 305. The first RF-enabled component 310 preferably includes a pair of antennas 312, 314 (although a single antenna structure could be used), a processor 322, a memory 320, an LCD display 328, at least one rechargeable battery 332, a long-range RF transceiver 316, one or more short-range RF transceivers 318, a power supply and recharging circuit 334, a cradle interface circuit 330, and one or more input devices, including, preferably, a keyboard 324 such as described in the above mentioned co-pending applications and a thumbwheel 326. The first component 310 may also include a pressure-sensitive writing tablet.

The input devices 324, 326 on the first component 310 are used to respond to and generate messages, such as E-mail messages. The first component 310 preferably interfaces with a belt-worn holster for receiving the first component 310 and securing it to a user's belt. The long-range RF transceiver 316 is used to send and receive information from the long-range wireless network 135, 145, 150, and the one or more short-range RF transceivers 318 are used to send and receive information from either the RF-enabled interface cradle 110 or the second component 305.

The power supply circuit 334 receives power from the battery 332 and provides conditioned power to the remainder of the circuitry in the first component 310. When the first component 310 is placed in the interface cradle 110, the first component can communicate information with the interface cradle 110, and hence the redirector application 120, via the cradle interface circuit 330. The cradle interface circuit 330 also receives recharging power from the interface cradle 110 for recharging the battery 332.

The second component 305 is preferably an RF-enabled ear-piece that may be connected to (both mechanically and electrically) the first component 310. The second component 305 preferably includes a microphone and a speaker 338, a short-range wireless transceiver 340, an antenna 342, and a rechargeable battery 336. The second component 305 may also include an integral processor 344. When the second component 305 is placed into the first component 310, a shared secret can be exchanged between the two wireless components of the mobile device 100 so that any communications between the first and second components 305/310 may be encrypted. Also, the rechargeable battery 336 of the second component 305 may be recharged by the battery 334 of the first component 310 through power supply recharging circuitry 334 when the two components are in electrical contact.

In other embodiments, the mobile device 100 may include a camera component for displaying or sending video images to the mobile user, or could include sensory circuits for monitoring the mobile user's vital information such as pulse and blood pressure. In these embodiments a nurse or doctor in a hospital floor could wear the first component, while the second might be in a patient's room monitoring some vital statistics. The short-range communication in this example might reach several hundred feet and several second components might be communicating to a single first component. This information could then be relayed on from the first component worn by the nurse or doctor to a central nursing station for all nurses on duty to see and monitor.

One example of how the mobile device 100 shown in FIGs. 4-7 can be used with the system described herein is as follows. When voice calls arrive to the user's desktop computer 120, the short-range wireless cradle 110 informs the desktop 120 whether it can route the call directly to the user's belt component 310. If the user is within communicable distance of the RF-enabled cradle 110, then the call is routed directly from the desktop computer 120 to the belt component 310 via the short-range wireless communication path, and then from the first component 310 to the ear-piece component 305. Alternatively, the call may be routed directly to the second component 305. If, however, the mobile device 100 (and hence the mobile user) is out of range of the interface cradle 110, or is in poor coverage, or is experiencing congestion problems, then the call is routed from the desktop host system 120 via the long-range wireless network 135, 145, 150 to the user's first component 310 of the mobile device 100. Once the call is received from the long-range network, the first component 310 then routes the call to the user's ear-piece component 305, and the phone call is completed preferably without either party to the call knowing that the re-routing has taken place.

In one embodiment, the ear-piece component 305 and the belt component 310 both include short-range RF transceivers that communicate with the RF-enabled interface cradle 110. Using this embodiment of the mobile device 100, voice calls are routed directly from the interface cradle 110 to the ear-piece component 305, and information data messages are routed from the interface cradle 110 to the belt component 310.

The mobile device 100 may also include a natural language-type voice interface between the ear-piece component 305 and the belt component 310. This interface allows the user to interact with the belt component 310 and issue a series of voice commands, such as: "Directory Services," "Find Name: Gary," "Select Gary M," or "Call Gary." In this series of example commands, the interface, which is preferably a software-based interface operating in the belt component 310, would preferably find several "Garys" and then prompt the user to select a particular "Gary." The voice interface may also allow enable the user to issue calling commands that are spoken into the microphone of the second component 305, such as "accept call," "route call," "refuse call," and "send call to voice-mail."

Using the voice interface, for example, the user may, in an important business meeting, temporarily suspend voice calls, but allow messages from their secretary through in the event of an emergency. Or, the first component 310 could be configured to voice caller ID information on incoming voice calls to the user through the second component 305 so that the user may decide whether to answer the call. The first component may, for example, play a message on the second component 305, such as "you have a call from Gary Mousseau, say Accept to accept the call or anything else to send the call to voice mail." Alternatively, the first component 310 might vibrate to indicate that a voice call is arriving, at which point the user could remove the first component and view a display of the caller's ID. Then, the user could interface with the input device(s) on the first component 310 to accept the call, to send it to voice mail, or to hang-up on the caller. In this manner, the mobile device 100 may operate as a hands-free calling center for receiving and transmitting voice calls, in addition to receiving and transmitting a variety of data types.

FIG. 8 depicts a first user 350 of a mobile device 100 such as shown in FIGs. 4-7 communicating via a first communication path comprising a short-range wireless link, and a second user 360 having a mobile device such as shown in FIGs. 4-7 communicating via a second communication path comprising a long range wireless link. In this figure, the first user 350 is in the vicinity of an RF-enabled interface cradle 110, but the second user 360 is not.

The first user 350 is preferably in her office, and has removed the second component 305 from the first component 310 of the mobile device 100 and placed it 305 in her ear. As voice calls or data messages arrive into the user's desktop system 120, the voice calls are preferably routed directly to the second component 305, while the data messages are transmitted to the first component 310. Alternatively, the voice calls may be routed to the first component 310 from the RF interface of the interface cradle 110, and the first component 310 would then transmit the voice calls up to the second component 305. The user's desktop system 120 may be operating as the redirector 130, or may be operating over a LAN in conjunction with a network-based redirector 225/130. The interface cradle 110 also has an antenna 605 for communicating with both the ear-piece component 305 and the first component 310.

The user 350 may configure the redirector 130 such that if the first component 310 is placed in the interface cradle 110, then the redirector 130 stops redirecting data to the first component 310. In this example, the act of placing the mobile device 100 in the cradle 110 operates as a trigger to stop and start redirection. In a similar embodiment, placing the ear-piece 305 into the first component 310 holder turns off redirection of voice calls to the user's ear from the first component 310. In this later example, if the ear-piece 305 is in the first component 310, which is in turn positioned in the interface cradle 110, then the user's 'traditional' phone or computer may be configured to ring when a voice call arrives.

In the bottom portion of FIG. 8, the second user 360 has moved out of the vicinity of any RF-enabled interface cradles 110. At this point, the ear-piece 305 preferably detects that it can no longer establish RF contact with an interface cradle 110, and thus establishes RF contact directly with the first component 310. Similarly, the first component 310 detects that it also cannot establish an RF link to the interface cradle 110, and, therefore, to maintain an RF link for data and voice, the first component 310 turns on its long-range RF transceiver to make contact with a long-range wireless network. As discussed above, when the mobile device 100 breaks contact with the interface cradle 110, contact information is provided to the redirector 130 so that it can determine whether to redirect information over the long-range RF network.

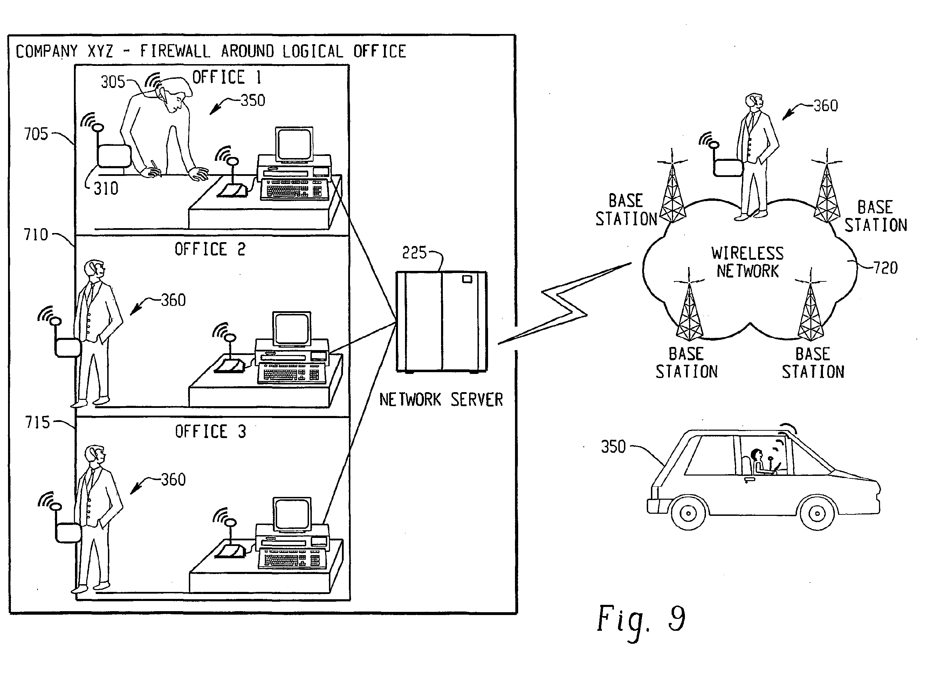

FIG. 9 expands upon FIG. 8, and shows the users 350/360 moving throughout an office environment and into an environment beyond the office. The office shown in FIG. 9 may include a plurality of RF-enabled interface cradles 110 that form a plurality of wireless 'cells,' referred to herein as pico-cells. As the second user 360 roams within the office, he is preferably connected and re-connected to whichever short-range pico-cell is located closest to him (i.e., which RF-enabled interface cradle 110 he is closest to.) As the user connects, disconnects and connects to the plurality of interface cradles 110, his physical presence is detected by virtue of the RF connections, and routing information is then provided from the cradles 110 to the redirector application 130, which is preferably operating at the network server 225. The redirector application 130 then uses this contact information to alter the location to which the user's data items are redirected. Thus, as the user 360 roams from pico-cell to pico-cell, his data items are automatically redirected to wherever he is physically located.

As the redirected data items 95 (voice and data) arrive for the user 360 they are routed to the correct desktop and sent directly through the interface cradle 110 to the user's ear-piece 305 or belt-worn component 310. Given the data-carrying capacity of current corporate LANs, i.e., 10 megabit or 100 megabit speeds, it is also possible to multiplex more than one voice call, or data exchange with a mobile device through the same interface cradle 110. Thus, more than one user may be served by each of the plurality of interface cradles 110. As the user leaves the office environment, and thus the range of the office pico-cell network, this is detected by the system and the redirector then routes any incoming data items over the long-range wireless network to the mobile device 100.

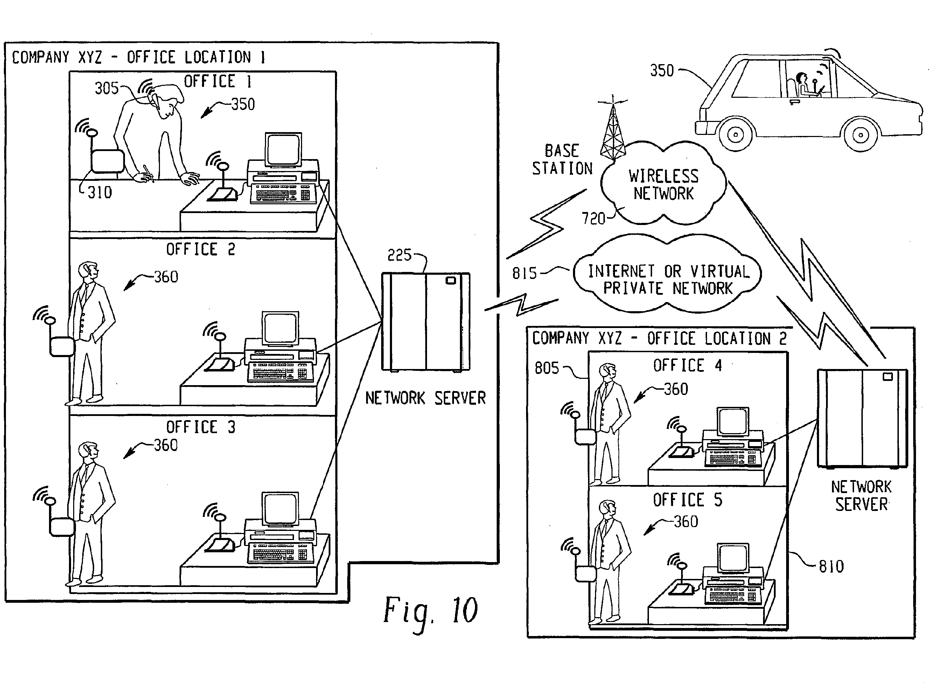

In this manner, voice and data may be routed behind the corporate firewall and LAN space wirelessly to the current location of the mobile user. As the user moves around the office space, all his phone calls, data messages and E-mail messages would be routed to the mobile device 100 via the network of pico-cells. Only if the user left the physical proximity of the office space, or if the coverage within the office space is insufficient, would the data items then be redirected to the mobile device 100 over the long-range wireless network. FIG. 10 also expands upon FIG. 8, and shows the users 350/360 moving through a first office environment and into a second, related office environment at a different physical location from the first office environment. In this scenario, there may be only a short period of time where the user's mobile device 100 may need to use the long-range network 720, such as when the user is traveling outside the corporate offices.

As the user 360 moves from the first office location to the second office location and enters Office 4 805 and Office 5 810, the user's mobile device 100 is once again in communication with one of the plurality of RF-enabled interface cradles 110 acting as a pico-cell. In this instance, the user's position information is provided to a network server serving the second office location, and is then communicated via a virtual private network (or VPN) 815 over a wide area network to the redirector application operating at the first office location. Thus, the redirector knows that the user is at a particular location in the second office and may redirect the user's voice and data information accordingly.

The VPN 815 may be created with a high-speed point-to-point connection over ISDN, Frame Relay or T1 circuits. Alternatively, many companies create VPNs 815 over the Internet with special security routers on both ends of the connection. The multi-office pico-cell solution shown in FIG. 10 is advantageous because it increases the speed at which data can be redirected, and reduces the price for re-routing data items 95 to the user. Generally, long-range wireless data networks may expensive to use. Thus, by redirecting data over the expensive long-range network only when absolutely necessary, the system described herein provides a less expensive wireless redirection solution.

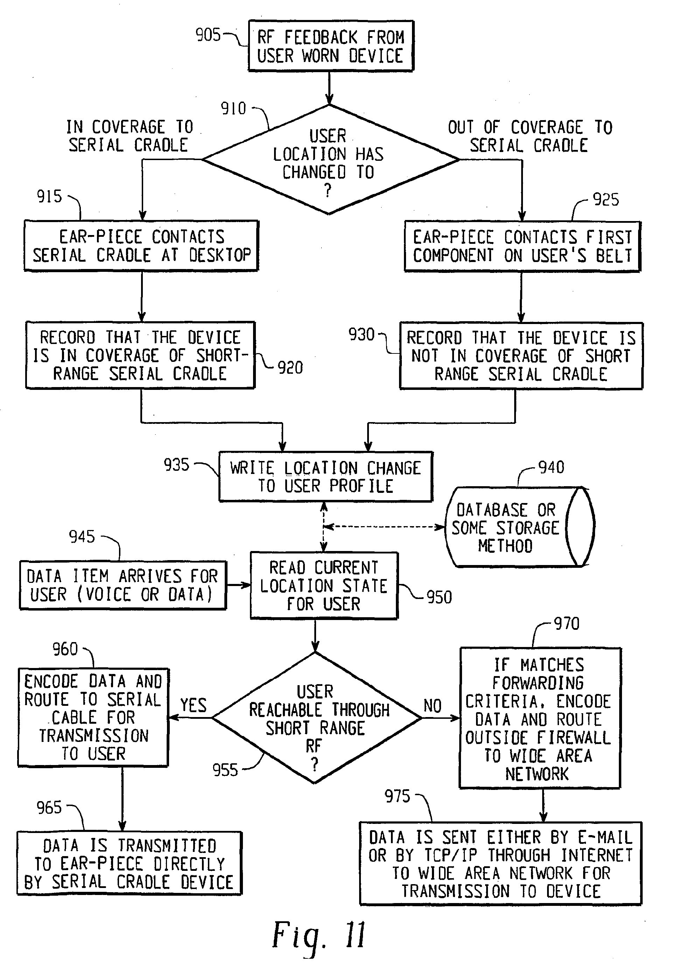

FIG. 11 is a logical flow diagram depicting a series of exemplary steps executed by a redirector application operating at a host system for determining which communication path should be used for routing data items to a particular mobile device. This flow begins either at step 905 or step 945. At step 905, RF feedback from the mobile device 100 is provided to one of the plurality of interface cradles 110. At step 945, data items such as voice calls or digital data messages arrive at the redirector application 130 for a particular mobile device user.

In step 910 the system determines whether the mobile user has changed location. This change information may be generated (1) if the user leaves RF coverage with the closest-range RF link provided by an interface cradle 110, or (2) if the user returns into short-range coverage of an interface cradle 110. If the user has entered short-range RF coverage of an interface cradle, then at step 915 the ear-piece component 305 of the mobile device 100 preferably makes contact with the closest interface cradle 110. A program operating in conjunction with the interface cradle 110 then receives the contact signal from the interface cradle 110 and records this information 920. If, alternatively, the user has just left shortrange RF coverage of the interface cradle 110, then at step 925 the ear-piece component 305 will contact the belt-worn component 310 of the mobile device, and the interface cradle 110 will detect that the previously established RF link has been broken. The interface cradle 110 detects that the RF link is missing by performing a periodic PING at the protocol level to check for the presence of one or more ear-piece components 305. This contact information is then passed from the interface cradle 110 to the program operating in conjunction with the interface cradle 110 where it is temporarily stored. In either case (making contact or breaking contact), the contact information is written to a user profile at step 935 for later retrieval 940.

The user profile may be maintained at the desktop system 120 in the example system shown in FIG. 1 where the redirection application 130 is operating at a desktop host. Alternatively, the user profile may be transferred over the LAN to the network server 225 in the example shown in FIG. 2. In any event, the redirector application 130 has access to the most recently written contact information from the plurality of interface cradles 110 from which it may determine where to redirect the user's data items.

At step 945, voice and data items 95 addressed for a particular user arrive into the system. Once items are received, the redirector application queries the user database 940 (where the user profile is stored) to determine whether the user may be reached via one of the one or more pico-cells generated by the plurality of interface cradles 110. If the user is currently marked as reachable through the short-range RF network, then the data items are encoded and routed to the appropriate interface cradle 110. The encoding step ensures that security is maintained between the cradle 110 and the mobile device 100. If the user leaves coverage of the short-range RF network just at the moment that a data item is about to be transmitted to him, then the system detects this occurrence and reverts to using the long-range RF network as described in step 970. Once the data item is encoded and sent to the interface cradle 110, it is preferably received and either (1) transmitted directly to the ear-piece component 305 if it is a voice call, or (2) transmitted directly to the belt-worn component 310 if it is a data message. If the database 940 indicates that the user is not reachable by the short-range RF network, then the data item is encoded for long-range RF transmission in step 970 and is transmitted to the user's mobile device 100 over the long-range wireless network. Preferably, the encoding scheme used for long-range RF transmission is different than that used for short-range RF transmission.

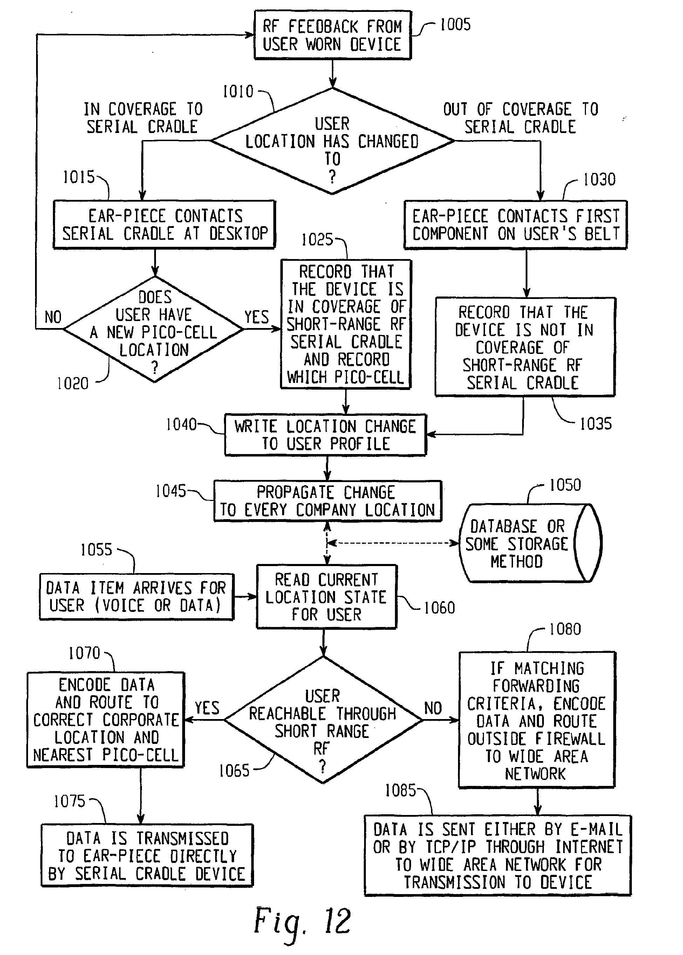

FIG. 12 is a logical flow diagram depicting a series of exemplary steps executed by a redirector application operating at a host system for determining which communication path should be used for routing data items to a particular mobile device within a corporate environment having a plurality of office locations. The steps shown in FIG. 12 are similar to those described above with respect to FIG. 11, but add support for a larger company with branch offices and many pico-cells located throughout the company's locations.

The method begins at step 1005 or 1055. At step 1005, RF feedback from the mobile device 100 is received by the system, preferably at one of the plurality of interface cradles 110. The interface cradle 110 operates in conjunction with a system program that determines, at step 1010, whether the particular mobile device 100 is making or breaking contact with the interface cradle 110. If the mobile device 100 is breaking contact with the interface cradle 110, then at step 1030 the ear-piece component 305 makes contact with the belt-worn component 310 (instead of the interface cradle 110), and at step 1035, the interface cradle 110 determines that it is no longer in communication with the ear-piece component 305 and records this lack-of-contact information.

If, however, the mobile device 100 is making contact with the interface cradle 110, then at step 1015 the ear-piece component 305 makes contact with the interface cradle 110, and at step 1020 the system determines whether the mobile device 100 is making contact with a new pico-cell (i.e., a different interface cradle 110). If the mobile device 100 is not making contact with a new interface cradle 110, then the method reverts to step 1005, and waits for additional RF feedback from the mobile device 100. If, however, the mobile device 100 is making contact with a new pico-cell cradle 110, then control passes to step 1025, where the system records contact information including information that identifies the particular pico-cell interface cradle 110.

At step 1040, the contact information from steps 1025/1035 is then provided to the redirector application 130, which stores this information in the appropriate user profile 1050. If the system includes multiple redirector applications (and perhaps multiple user profiles), then at step 1045 the contact information is propagated to the other redirector applications that may be operating at other company locations from the first redirector.

As data items are received by the redirector (or plurality of redirectors) at step 1055, the redirector reads the user profile 1050 in order to determine the approximate physical location of the user. If the user is reachable via one of the pico-cell interface cradles 110, as determined at step 1065, then control passes to step 1070 where the data items are encoded and routed to the appropriate interface cradle 110. The interface cradle 110 then transmits the data items to the mobile device 100 via the short-range communication path. If the user is not reachable via one of the pico-cell interface cradles 110, then at step 1080 the system determines if the data items are to be redirected (as configured by the user of the mobile device), and if so, then the data items are encoded and routed outside the corporate firewall to the wide-area wireless network and transmitted to the mobile device 100 in step 1085.

Further aspects and advantages of the invention will be appreciated from the following numbered clauses.
1. A method of redirecting data from a host system to a mobile communication device capable of communicating via a short-range wireless communication network and a long-range wireless communication network, the method comprising the steps of : receiving data at the host system; determining whether the mobile communication device is within coverage of the short-range wireless communication network; if the mobile communication device is within coverage of the short-range wireless communication network, then redirecting the received data from the host system to the mobile communication device via the short-range wireless communication network; and if the mobile communication device is not within coverage of the shortrange wireless communication network, then redirecting the received data from the host system to the mobile communication device via the long-range wireless communication network.
2. The method of clause 1, further comprising the steps of : the mobile communication device transmitting contact information to the short-range wireless communication network indicating it is within coverage of the short-range wireless communication network ; and transmitting the contact information to the host system indicating that the mobile communication device is within coverage of the short-range wireless communication network.
3. The method of clause 2, further comprising the steps of : the short-range wireless network detecting that the mobile communication device is outside of coverage of the short-range wireless network; and transmitting lack of contact information to the host system indicating that the mobile communication device is outside of coverage of the short-range wireless communication network.
4. The method of clause 3, further comprising the step of : storing the contact information and the lack of contact information at the host system.
5. The method of clause 1, wherein the host system is coupled to the short-range wireless network via a local area network (LAN), and wherein the short-range wireless network includes a plurality of wirelessly-enabled interface cradles, the method further comprising the steps of : providing a user profile database at the host system, the user profile database including identification information for a plurality of mobile communication devices, and also including contact information and lack of contact information for each of the plurality of mobile communication devices.
6. The method of clause 5, further comprising the steps of : receiving contact information at the host system, the contact information including the identity of a particular mobile communication device and a network address on the LAN for a particular wirelessly-enabled interface cradle; storing the contact information in the user profile database; associating the received data to the particular mobile communication device; and redirecting the received data to the particular wirelessly-enabled interface cradle using the contact information stored in the user profile database.
7. The method of clause 6, further comprising the step of : transmitting the received data from the particular wirelessly-enabled interface cradle to the particular mobile communication device.
8. The method of clause 1, wherein the determining step further comprises the step of : when the mobile communication device is within the physical proximity of the short-range wireless network, generating contact information; transmitting the contact information to the host system; and using the contact information to determine whether the mobile communication device is within coverage of the short-range wireless network.
9. The method of clause 8, wherein the determining step further comprises the steps of : when the mobile communication device is not within the physical proximity of the short-range wireless network, generating lack of contact information ; transmitting the lack of contact information to the host system; and using the lack of contact information to determine whether the mobile communication device is within coverage of the short-range wireless network.
10. The method of clause 1, wherein the determining step further comprises the steps of : placing the mobile communication device in an interface cradle coupled to the short-range wireless network; generating contact information indicating that the mobile communication device is physically connected to the short-range wireless network; transmitting the contact information to the host system; and using the contact information to determine whether the mobile communication device is within coverage of the short-range wireless network.
11. The method of clause 1, wherein the determining step further comprises the steps of : activating a screen saver program at the host system; and if the screen saver program is activated, then determining that the mobile communication device is not within coverage of the short-range wireless network.
12. The method of clause 1, wherein the determining step further comprises the steps of : detecting whether a user of the mobile communication device is in physical proximity to the short-range wireless network.
13. The method of clause 12, wherein the detecting step further comprises the steps of : providing a heat sensor in physical proximity to the short-range wireless network; and detecting the physical presence of the user of the mobile communication device using the heat sensor.
14. The method of clause 12, wherein the detecting step further comprises the steps of : providing a visual image sensor in physical proximity to the short-range wireless network; and detecting the physical presence of the user of the mobile communication device using the visual image sensor.
15. The method of clause 1, wherein the short-range wireless network includes a plurality of Bluetooth-enabled wireless devices coupled to a network.
16. The method of clause 15, wherein the plurality of Bluetooth-enabled wireless devices are interface cradles capable of physically and electrically connecting to the mobile communication device.
17. The method of clause 1, wherein the short-range wireless network includes a plurality of RF-enabled interface cradles coupled to a local area network (LAN).
18. The method of clause 17, further comprising the steps of: as the mobile communication device comes within RF coverage of one of the RF-enabled interface cradles, generating contact information indicating that the mobile communication device is capable of communicating with the one RFenabled interface cradle, the contact information including an electronic address of the one RF-enabled interface cradle on the LAN; and redirecting the received data to the one RF-enabled interface cradle using the contact information.
19. The method of clause 18, further comprising the steps of : as the mobile communication device moves out of RF coverage of the one
   RF-enabled interface cradle, generating lack of contact information indicating that the mobile communication device is not capable of communicating with the one RF-enabled interface cradle; and redirecting the received data to the long-range wireless network until the mobile communication device moves into RF coverage of the one RF-enabled interface cradle.
20. The method of clause 18, further comprising the steps of : as the mobile communication device moves out of RF coverage of the one
   RF-enabled interface cradle and into RF coverage of a second RF-enabled interface cradle, generating contact information indicating that the mobile communication device is capable of communicating with the second RF-enabled interface cradle, the contact information including an electronic address of the second RF-enabled interface cradle on the LAN; and redirecting the received data to the second RF-enabled interface cradle using the contact information.
21. The method of clause 1, further comprising the steps of : providing a mobile communication device having two wireless components, a first wireless component worn on the belt of a user and a second wireless component worn in the user's ear; the received data at the host system including at least one voice call and at least one data message; and redirecting the voice call to the second wireless component of the mobile communication device and redirecting the data message to the first wireless component of the mobile communication device.
22. The method of clause 21, further comprising the steps of : redirecting the voice call from the host system to the first wireless component of the mobile communication device; and redirecting the voice call from the first wireless component to the second wireless component of the mobile communication device.
23. The method of clause 1, wherein the long-range wireless network is the
   Mobitex network, the GSM/GPRS network, or the CDMA network.
24. The method of clause 1, further comprising the steps of : physically and electrically connecting the mobile device to the short-range wireless network; exchanging a shared secret between the physically and electrically connected mobile device and the host system; and using the shared secret to encrypt the received data prior to redirecting it from the host system to the mobile device.
25. The method of clause 24, further comprising the steps of : configuring a security password and storing the security password at the host system; after the mobile device has been physically and electrically connected to the short-range wireless network, prompting a user of the mobile device to enter the security password; and if the entered security password matches the stored security password, then generating the shared secret.
26. The method of clause 24, wherein the mobile device includes at least two wireless components, a first wireless component worn on the belt of a user and a second wireless component worn in the user's ear, the method further comprising the step of : storing the shared secret in the first wireless component of the mobile device; detecting whether the second wireless component of the mobile device is physically and electrically connected to the first wireless component of the mobile device; providing the shared secret to the second wireless component of the mobile device; and using the shared secret to encrypt and decrypt communications between the first wireless component and the second wireless component of the mobile device.
27. The method of clause 1, wherein the short-range wireless network includes a plurality of office-specific short-range wireless networks, each office-specific short-range wireless network including a plurality of RF-enabled interface devices for generating a plurality of pico-cells within a particular office space, the method further comprising the steps of : providing a virtual private network for coupling the plurality of officespecific short-range wireless networks; if the mobile device is within coverage of the short-range wireless network, then determining in which office space the mobile device is located; and redirecting the received data from the host system to the office-specific shortrange wireless network for the particular office space where the mobile device is located via the virtual private network.
28. The method of clause 27, further comprising the steps of : maintaining contact information at the host system, the contact information indicating the office space where the mobile device is located and also indicating the network address of the RF-enabled interface device with which the mobile device is communication ; and providing this contact information to each of the office-specific shortrange wireless networks.
29. The method of clause 1, wherein the host system is a desktop computer system, and the shortrange wireless communication network includes at least one RF-enabled interface cradle coupled to the desktop computer system.
30. The method of clause 1, wherein the host system is a network server, and the short-range wireless communication network includes a plurality of RF-enabled interface cradles coupled to the network server via a local area network.
31. The method of clause 1, further comprising the steps of : providing two communication paths within the short-range wireless communication network for communicating with the mobile device; determining which of the two communication paths is least congested; and selecting the communication path that is least congested for redirecting data to the mobile device.
32. A method of routing data from a host system to a mobile device, comprising the steps of :
   providing a short-range wireless network having a first coverage area ; providing a long-range wireless network having a second coverage area which overlaps with and is larger than the first coverage area; determining whether the mobile device is within the first coverage area; if the mobile device is within the first coverage area, then routing data received at the host system for a user of the mobile device to the mobile device via the short-range wireless network; and if the mobile device is not within the first coverage area, then routing data received at the host system for a user of the mobile device to the mobile device via the long-range wireless network.
33. The method of clause 32, wherein the determining step further comprising the step of detecting whether the user of the mobile device is within physical proximity to the host system.
34. The method of clause 33, wherein the detecting step is accomplished using a heat sensor or a visual image sensor coupled to the host system.
35. The method of clause 32, wherein the short-range wireless network includes a plurality of RF-enabled interface cradles, the method further comprising the steps of : placing the mobile device in contact with one of the RF-enabled interface cradles; entering a security password into the mobile device; if the entered security password is valid, then exchanging a shared secret between the mobile device and the host system; and using the shared secret to encrypt and decrypt communications between the host system and the mobile device.
36. The method of clause 32, wherein the determining step further comprises the steps of : if the mobile device comes within the first coverage area, then generating contact information indicating that the mobile device is within the first coverage area ; and providing the contact information to the host system.
37. The method of clause 32, wherein the mobile device includes two wireless components, a first wireless component for transmitting and receiving data messages and a second wireless component for transmitting and receiving voice calls, the method further comprising the steps of : routing voice calls received at the host system to the second wireless component of the mobile device; and routing data messages received at the host system to the first wireless component of the mobile device.
38. The method of clause 37, wherein both the first and second wireless components are capable of communication over the short-range wireless network.
39. The method of clause 37, further comprising the steps of : detecting that the second wireless component is physically and electrically connected to the first wireless component; and routing voice calls from the host system to a voice mail system account associated with the user of the mobile device.
40. The method of clause 39, wherein the second wireless component includes a rechargeable battery and a short-range wireless transceiver, the method further comprising the step of :
   recharging the rechargeable battery of the second wireless component using a power source in the first wireless component when the second wireless component is physically and electrically connected to the first wireless component.
41. A system for redirecting data to a mobile device having a long-range transceiver and a shortrange transceiver, comprising: a redirector program for receiving data associated with a user of the mobile device and for redirecting the received data to the mobile device; a long-range wireless network for communicating data to the long-range transceiver in the mobile device; and a shortrange wireless network for communicating data to the short-range transceiver in the mobile device;
   wherein the system determines whether the mobile device is within a coverage area of the shortrange wireless network, and if so, instructs the redirector program to redirect the received data to the mobile device via the shortrange wireless network, and if not, instructs the redirector program to redirect the received data to the mobile device via the long-range wireless network.
42. The system of clause 41, wherein the short-range wireless network includes at least one RF-enabled interface cradle for communicating with the short-range transceiver of the mobile device.
43. The system of clause 42, wherein the at least one RF-enabled interface cradle is coupled to the redirector program via a host system.
44. The system of clause 43, wherein the redirector program is operating at the host system, and wherein the at least one RF-enabled interface cradle is coupled to the host system via a local area network.
45. The system of clause 41, wherein the short range wireless network includes a plurality of RF-enabled interface cradles for communicating with the short-range transceiver of the mobile device.
46. The system of clause 45, wherein the plurality of RF-enabled interface cradles are coupled to the redirector program via a local area network.
47. The system of clause 46, wherein the redirector program is operating at a network server coupled to the local area network.
48. The system of clause 47, wherein the redirector program is capable of redirecting data to a plurality of mobile devices.
49. The system of clause 41, wherein the short-range wireless network includes a plurality of office-specific short-range wireless sub-networks, each office-specific short-range wireless sub-network including a plurality of RF-enabled interface cradles for communicating with the short-range RF transceiver of the mobile device.
50. The system of clause 49, wherein the plurality of office-specific short-range wireless sub-networks are connected via a virtual private network.
51. The system of clause 50, wherein the virtual private network is implemented over the Internet.
52. The system of clause 42, wherein the at least one RF-enabled interface cradle detects whether the mobile device is within its proximity and generates contact information which is provided to the redirector program.
53. The system of clause 52, wherein the contact information includes an electronic address of the at least one RF-enabled interface cradle.
54. The system of clause 41, wherein the short-range wireless network includes a plurality of Bluetooth-enabled interface devices.
55. The system of clause 42, wherein the at least one RF-enabled interface cradle includes an interface for electrically and physically coupling to the mobile device.
56. The system of clause 55, further comprising: means for detecting that the mobile device is coupled to the interface of the at least one RF-enabled interface cradle; and means for exchanging a shared secret between the mobile device and the redirector program when the mobile device is coupled to the interface of the at least one RF-enabled interface cradle.
57. The system of clause 41, wherein the mobile device is a cellular telephone, a two-way pager, or a personal digital assistant.
58. The system of clause 41, further comprising: means for detecting short-range RF communications from the mobile device and for generating contact information that is provided to the system.
59. The system of clause 58, wherein the means for detecting includes an RFenabled interface device coupled to the short-range wireless network for receiving short-range RF communications from the mobile device.
60. The system of clause 41, further comprising: a sensor for detecting the physical presence of a user of the mobile device within the proximity of the short-range wireless network.
61. The system of clause 60, wherein the sensor is a heat sensor or a visual image sensor.
62. The system of clause 41, wherein the redirector program encrypts the received data with a shared secret prior to redirecting it to the mobile device.
63. The system of clause 62, further comprising: means for detecting that the mobile device is physically and electrically connected to a secure connection to the redirector program; and means for exchanging the shared secret between the mobile device and the redirector program.
64. The system of clause 41, wherein the mobile device includes a first wireless component and a second wireless component, wherein the first wireless component includes a short-range RF transceiver and a long-range RF transceiver, and wherein the second wireless component includes a short-range RF transceiver.
65. The system of clause 64, wherein the first component of the mobile device is worn on a user's belt, and the second component of the mobile device is worn in the user's ear.
66. The system of clause 65, wherein voice calls are redirected to the second component of the mobile device and data messages are redirected to the first component of the mobile device.
67. The system of clause 66, wherein voice calls are redirected directly from the short-range wireless network to the second component of the mobile device.
68. The system of clause 66, wherein voice call are redirected from the shortrange wireless network to the first component of the mobile device and then from the first component of the mobile device to the second component of the mobile device.
69. The system of clause 65, wherein the first component of the mobile device includes an interface for physically and electrically contacting the second component of the mobile device.
70. The system of clause 69, wherein the first and second components include rechargeable batteries, and wherein the rechargeable battery of the second component is recharged by the rechargeable battery of the first component when the second component is placed in the interface of the first component.
71. The system of clause 69, wherein the first component can communicate information to the second component via the interface.
72. The system of clause 69, wherein the second component includes a microphone and a speaker, and the first component includes a natural language voice interface, wherein a user of the mobile device can voice commands to the first component by speaking into the microphone of the second component.
73. The system of clause 72, wherein the voice commands include redirection commands that are transmitted by the first component back through the short range wireless network or the long-range wireless network to the redirector program.
74. A mobile communicator, comprising: a first wireless component having a housing with an external interface, and including a long-range RF transceiver and a short-range RF transceiver, wherein the long-range RF transceiver is used to communicate with a long-range wireless network and the short-range RF transceiver is used to communication with a short-range wireless network; and a second wireless component detachably coupled to the external interface of the housing, the second wireless component include a short-range RF transceiver for communicating with either the short range wireless network or the short-range RF transceiver of the first wireless component.
75. The mobile communicator of clause 74, wherein the external interface provides a physical and electrical coupling between the first wireless component and the second wireless component.
76. The mobile communicator of clause 74, wherein the second wireless component includes a speaker and a microphone.
77. The mobile communicator of clause 76, wherein the second wireless component is configured for placement into the ear of a user.
78. The mobile communicator of clause 74, wherein the second wireless component includes a rechargeable battery.
79. The mobile communicator of clause 78, wherein the second wireless component includes a processor for controlling the short-range RF transceiver.
80. The mobile communicator of clause 74, wherein the short-range RF transceiver of the second wireless component is enabled when the second wireless component is detached from the first wireless component.
81. The mobile communicator of clause 74, wherein the mobile communicator is a cellular telephone, a two-way pager or a personal digital assistant.
82. The mobile communicator of clause 75, wherein the first and second wireless components can exchange information via the respective short-range RF transceivers or via the external interface.
83. The mobile communicator of clause 82, wherein encryption information is exchanged between the first and second wireless components only when the second wireless component is attached to the external interface of the first wireless component.
84. The mobile communicator of clause 74, wherein the first wireless component includes a processor, a QWERTY keyboard for entering messages into the mobile communicator, a display, and a thumbwheel input device for navigating and selecting information presented on the display.
85. The mobile communicator of clause 84, wherein the first wireless component includes a serial interface for electrically coupling the first wireless component to an interface cradle.

Having described in detail the preferred embodiments of the present invention, including the preferred methods of operation, it is to be understood that this operation could be carried out with different elements and steps. This preferred embodiment is presented only by way of example and is not meant to limit the scope of the present invention which is defined by the following claims.

## Claims

1. A method, operable at a host system, of redirecting data from the host system (120, 225) to a mobile communication device, hereinafter MCD (100), the method comprising the steps of:
receiving, at the host system, contact information for the MCD from a short-range wireless communication network that comprises a plurality of pico-cells if the MCD makes contact with a given pico-cell and if the MCD is no longer in communication with the short-range wireless communication network;
responsive to receiving the contact information, the host system writing the contact information to a user profile associated with the MCD;
responsive to receiving data for a user of the MCD, the host system determining whether the MCD (100) is reachable via any pico-cell (110, 605) of the short-range wireless communication network;
if the mobile communication device (100) is reachable via a first pico-cell, the host system redirecting the data to the mobile communication device (100) via the short-range wireless communication network and the first pico-cell; and
if the mobile communication device (100) is not reachable via the short-range wireless communication network, the host system redirecting the data to the mobile communication device (100) via a long-range wireless communication network.

2. The method of claim 1, wherein the data comprises at least one of phone calls, email messages, calendar, events, meeting notifications, address entries, journal entries and personal reminders.

3. The method of claim 1, wherein the contact information indicates the physical location of the MCD.

4. The method as recited in claim 1, further comprising the host system determining if the mobile communication device is no longer in communication with the first pico-cell and has made contact with a second pico-cell of the plurality of pico-cells and if so, redirecting the data to the mobile communication device (100) via the short-range wireless communication network and the second pico-cell.

5. A system for redirecting data from a host system (120, 225) to a mobile communication device, hereinafter MCD (100), the system comprising:
means at the host for receiving contact information for the MCD from a short-range wireless communication network that comprises a plurality of pico-cells if the MCD makes contact with a given pico-cell and if the MCD is no longer in communication with the short-range wireless communication network;
means at the host, responsive to receiving the contact information, for writing the contact information to a user profile associated with the MCD;
means at the host, responsive to receiving data for a user of the MCD, for determining whether the MCD (100) is reachable via any pico-cell (110, 605) of the short-range wireless communication network;
means at the host, if the mobile communication device (100) is reachable via a first pico-cell, for redirecting the data to the mobile communication device (100) via the short-range wireless communication network and the first pico-cell; and
means at the host, if the mobile communication device (100) is no longer in communication with the short-range wireless communication network, for redirecting the data to the mobile communication device (100) via a long-range wireless communication network.

6. The system of claim 5, wherein the data comprises at least one of phone calls, email messages, calendar, events, meeting notifications, address entries, journal entries and personal reminders.

7. The system of claim 5, wherein the contact information indicates the physical location of the MCD.

8. The system of claim 5, further comprising means for determining if the mobile communication device is no longer in communication with the first pico-cell and has made contact with a second pico-cell of the plurality of pico-cells and means, for redirecting the data to the mobile communication device (100) via the short-range wireless communication network and the second pico-cell if so.

9. A redirector software application, operable on a host system, for redirecting data from the host system (120, 225) to a mobile communication device hereinafter MCD (100) associated therewith, the redirector software application comprising:
instructions for receiving contact information for the MCD from a short-range wireless communication network that comprises a plurality of pico-cells if the MCD makes contact with a given pico-cell and if the MCD is no longer in communication with the short-range wireless communication network;
instructions, responsive to receiving the contact information, for writing the contact information to a user profile associated with the MCD;
instructions, responsive to receiving data for a user of the MCD, for determining whether the MCD (100) is reachable via any pico-cell (110, 605) of the short-range wireless communication network;
instructions, if the mobile communication device (100) is reachable via a first pico-cell, for redirecting the data to the mobile communication device (100) via the short-range wireless communication network and the first pico-cell; and
instructions, if the mobile communication device (100) is no longer in communication with the short-range wireless communication network, for redirecting the data to the mobile communication device (100) via a long-range wireless communication network.

10. The redirector software application of claim 9, wherein the data comprises at least one of phone calls, email messages, calendar, events, meeting notifications, address entries, journal entries and personal reminders.

11. The redirector software application of claim 9, wherein the contact information indicates the physical location of the MCD.

12. The redirector software application of claim 9, further comprising instructions for determining if the mobile communication device is no longer in communication with the first pico-cell and has made contact with a second pico-cell of the plurality of pico-cells and means for redirecting the data to the mobile communication device (100) via the short-range wireless communication network and the second pico-cell if so.

13. The redirector software application of claim 9, further comprising instructions, performed prior to sending the data, for determining whether the data should be forwarded to the MCD.

## Patentansprüche

1. Ein Verfahren, das an einem Hostsystem betriebsfähig ist, zum Um- bzw. Weiterleiten von Daten von dem Hostsystem (120, 225) an eine mobile Kommunikationsvorrichtung, im Folgenden MCD (mobile communication device) (100), wobei das Verfahren die Schritte aufweist:
Empfangen, an dem Hostsystem, von Kontaktinformation für die MCD von einem drahtlosen Nahbereichs-Kommunikationsnetzwerk, das eine Vielzahl von Pico-Zellen aufweist, wenn die MCD mit einer gegebenen Pico-Zelle in Kontakt tritt und wenn die MCD nicht länger in Kommunikation mit dem drahtlosen Nahbereichs-Kommunikationsnetzwerk ist;
in Reaktion auf ein Empfangen der Kontaktinformation, Schreiben der Kontaktinformation durch das Hostsystem in ein Benutzerprofil, das mit der MCD assoziiert ist;
in Reaktion auf ein Empfangen von Daten für einen Benutzer der MCD, Bestimmen, durch das Hostsystem, ob die MCD (100) über eine Pico-Zelle (110, 605) des drahtlosen Nahbereichs-Kommunikationsnetzwerks erreichbar ist;
wenn die mobile Kommunikationsvorrichtung (100) über eine erste Pico-Zelle erreichbar ist, Um- bzw. Weiterleiten, durch das Hostsystem, der Daten an die mobile Kommunikationsvorrichtung (100) über das drahtlose Nahbereichs-Kommunikationsnetzwerk und die erste Pico-Zelle; und
wenn die mobile Kommunikationsvorrichtung (100) über das drahtlose Nahbereichs-Kommunikationsnetzwerk nicht erreichbar ist, Um- bzw. Weiterleiten, durch das Hostsystem, der Daten an die mobile Kommunikationsvorrichtung (100) über ein drahtloses Weitbereichs-Kommunikationsnetzwerk.

2. Das Verfahren gemäß Anspruch 1, wobei die Daten zumindest eines aus Telefonanrufen, Email-Nachrichten, Kalender, Ereignissen, Besprechungsbenachrichtigungen, Adresseinträgen, Journaleinträgen und persönlichen Erinnerungen aufweisen.

3. Das Verfahren gemäß Anspruch 1, wobei die Kontaktinformation die physikalische Position der MCD angibt.

4. Das Verfahren gemäß Anspruch 1, das weiter ein Bestimmen durch das Hostsystem aufweist, ob die mobile Kommunikationsvorrichtung nicht länger in Kommunikation mit der ersten Pico-Zelle ist und mit einer zweiten Pico-Zelle der Vielzahl von Pico-Zellen in Kontakt getreten ist, und wenn dem so ist, Um- bzw. Weiterleiten der Daten an die mobile Kommunikationsvorrichtung (100) über das drahtlose Nahbereichs-Kommunikationsnetzwerk und die zweite Pico-Zelle.

5. Ein System zum Um- bzw. Weiterleiten von Daten von einem Hostsystem (120, 225) an eine mobile Kommunikationsvorrichtung, im Folgenden MCD (mobile communication device) (100), wobei das System aufweist:
Mittel an dem Host zum Empfangen von Kontaktinformation für die MCD von einem drahtlosen Nahbereichs-Kommunikationsnetzwerk, das eine Vielzahl von Pico-Zellen aufweist, wenn die MCD mit einer gegebenen Pico-Zelle in Kontakt tritt und wenn die MCD nicht länger in Kommunikation mit dem drahtlosen Nahbereichs-Kommunikationsnetzwerk ist;
Mittel an dem Host zum Schreiben der Kontaktinformation in ein Benutzerprofil, das mit der MCD assoziiert ist, in Reaktion auf ein Empfangen der Kontaktinformation;
Mittel an dem Host zum Bestimmen, in Reaktion auf ein Empfangen von Daten für einen Benutzer der MCD, ob die MCD (100) über eine Pico-Zelle (110, 605) des drahtlosen Nahbereichs-Kommunikationsnetzwerks erreichbar ist;
Mittel an dem Host zum Um- bzw. Weiterleiten der Daten an die mobile Kommunikationsvorrichtung (100) über das drahtlose Nahbereichs-Kommunikationsnetzwerk und die erste Pico-Zelle, wenn die mobile Kommunikationsvorrichtung (100) über eine erste Pico-Zelle erreichbar ist; und
Mittel an dem Host zum Um- bzw. Weiterleiten der Daten an die mobile Kommunikationsvorrichtung (100) über ein drahtloses Weitbereichs-Kommunikationsnetzwerk, wenn die mobile Kommunikationsvorrichtung (100) nicht länger mit dem drahtlosen Nahbereichs-Kommunikationsnetzwerk in Kommunikation ist.

6. Das System gemäß Anspruch 5, wobei die Daten zumindest eines aus Telefonanrufen, Email-Nachrichten, Kalender, Ereignissen, Besprechungsbenachrichtigungen, Adresseinträgen, Journaleinträgen und persönlichen Erinnerungen aufweisen.

7. Das System gemäß Anspruch 5, wobei die Kontaktinformation die physikalische Position der MCD angibt.

8. Das System gemäß Anspruch 5, das weiter Mittel aufweist zum Bestimmen, ob die mobile Kommunikationsvorrichtung nicht länger in Kommunikation mit der ersten Pico-Zelle ist und mit einer zweiten Pico-Zelle der Vielzahl von Pico-Zellen in Kontakt getreten ist, und Mittel zum Um- bzw. Weiterleiten der Daten an die mobile Kommunikationsvorrichtung (100) über das drahtlose Nahbereichs-Kommunikationsnetzwerk und die zweite Pico-Zelle, wenn dem so ist.

9. Eine Umleitungs-Softwareanwendung, die auf einem Hostsystem betriebsfähig ist, zum Um- bzw. Weiterleiten von Daten von dem Hostsystem (120, 225) an eine assoziierte mobile Kommunikationsvorrichtung, im Folgenden MCD (mobile communication device) (100), wobei die Umleitungs-Softwareanwendung aufweist:
Anweisungen zum Empfangen von Kontaktinformation für die MCD von einem drahtlosen Nahbereichs-Kommunikationsnetzwerk, das eine Vielzahl von Pico-Zellen aufweist, wenn die MCD mit einer gegebenen Pico-Zelle in Kontakt tritt und wenn die MCD nicht länger in Kommunikation mit dem drahtlosen Nahbereichs-Kommunikationsnetzwerk ist;
Anweisungen zum Schreiben der Kontaktinformation in ein Benutzerprofil, das mit der MCD assoziiert ist, in Reaktion auf ein Empfangen der Kontaktinformation;
Anweisungen zum Bestimmen, in Reaktion auf ein Empfangen von Daten für einen Benutzer der MCD, ob die MCD (100) über eine Pico-Zelle (110, 605) des drahtlosen Nahbereichs-Kommunikationsnetzwerks erreichbar ist;
Anweisungen zum Um- bzw. Weiterleiten der Daten an die mobile Kommunikationsvorrichtung (100) über das drahtlose Nahbereichs-Kommunikationsnetzwerk und die erste Pico-Zelle, wenn die mobile Kommunikationsvorrichtung (100) über eine erste Pico-Zelle erreichbar ist; und
Anweisungen zum Um- bzw. Weiterleiten der Daten an die mobile Kommunikationsvorrichtung (100) über ein drahtloses Weitbereichs-Kommunikationsnetzwerk, wenn die mobile Kommunikationsvorrichtung (100) nicht länger in Kommunikation mit dem drahtlosen Nahbereichs-Kommunikationsnetzwerk ist.

10. Die Umleitungs-Softwareanwendung gemäß Anspruch 9, wobei die Daten zumindest eines aus Telefonanrufen, Email-Nachrichten, Kalender, Ereignissen, Besprechungsbenachrichtigungen, Adresseinträgen, Journaleinträgen und persönlichen Erinnerungen aufweisen.

11. Die Umleitungs-Softwareanwendung gemäß Anspruch 9, wobei die Kontaktinformation die physikalische Position der MCD angibt.

12. Die Umleitungs-Softwareanwendung gemäß Anspruch 9, die weiter Mittel aufweist zum Bestimmen, ob die mobile Kommunikationsvorrichtung nicht länger in Kommunikation mit der ersten Pico-Zelle ist und mit einer zweiten Pico-Zelle der Vielzahl von Pico-Zellen in Kontakt getreten ist, und Mittel zum Um- bzw. Weiterleiten der Daten an die mobile Kommunikationsvorrichtung (100) über das drahtlose Nahbereichs-Kommunikationsnetzwerk und die zweite Pico-Zelle, wenn dem so ist.

13. Die Umleitungs-Softwareanwendung gemäß Anspruch 9, die weiter Anweisungen aufweist, die vor dem Senden der Daten ausgeführt werden, zum Bestimmen, ob die Daten an die MCD um- bzw. weiterzuleiten sind.

## Revendications

1. Procédé, pouvant fonctionner sur un système hôte, de redirection de données entre le système hôte (120, 225) et un dispositif de communication mobile (100), le procédé comprenant les étapes consistant à :
recevoir sur le système hôte des informations de contact intéressant le dispositif de communication mobile provenant d'un réseau de communication sans fil à courte portée qui comprend une pluralité de picocellules, si le dispositif de communication mobile établit le contact avec une picocellule considérée et si le dispositif de communication mobile n'est plus en communication avec le réseau de communication sans fil à courte portée ;
à la suite de la réception des informations de contact, écrire les informations de contact par le système hôte dans un profil d'utilisateur associé au dispositif de communication mobile ;
à la suite de réception de données pour un utilisateur du dispositif de communication mobile, déterminer par le système hôte si le dispositif de communication mobile (100) est accessible par l'une quelconque des picocellules (110, 605) du réseau de communication sans fil à courte portée ;
si le dispositif de communication mobile (100) est accessible par une première picocellule, rediriger les données par le système hôte vers le dispositif de communication mobile, via le réseau de communication sans fil à courte portée et la première picocellule ; et
si le dispositif de communication mobile (100) n'est pas accessible via le réseau de communication sans fil à courte portée, rediriger les données par le système hôte vers le dispositif de communication mobile (100) via un réseau de communication sans fil à longue portée.

2. Procédé selon la revendication 1, dans lequel les données sont constituées d'au moins un des éléments suivants : appels téléphoniques, messages de courriel, calendrier, événements, avis de réunions, rubriques d'adresse, rubriques de journal et rappels personnels.

3. Procédé selon la revendication 1, dans lequel les informations de contact indiquent la position physique du dispositif de communication mobile.

4. Procédé selon la revendication 1, comprenant en outre les étapes consistant à déterminer par le système hôte si le dispositif de communication mobile n'est plus en communication avec la première picocellule et a établi un contact avec une seconde picocellule parmi la pluralité de picocellules et, si tel et le cas, rediriger les données vers le dispositif de communication mobile (100) via le réseau de communication sans fil à courte portée et la seconde picocellule.

5. Système destiné à rediriger des données entre un système hôte (120, 225) et un dispositif de communication mobile (100), le système comprenant :
un moyen sur le système hôte destiné à recevoir des informations de contact intéressant le dispositif de communication mobile provenant d'un réseau de communication sans fil à courte portée qui comprend une pluralité de picocellules, si le dispositif de communication mobile établit le contact avec une picocellule considérée et si le dispositif de communication mobile n'est plus en communication avec le réseau de communication sans fil à courte portée ;
un moyen sur le système hôte qui, à la suite de la réception des informations de contact, est destiné à écrire les informations de contact par le système hôte dans un profil d'utilisateur associé au dispositif de communication mobile ;
un moyen sur le système hôte qui, à la suite de réception de données pour un utilisateur du dispositif de communication mobile, est destiné à déterminer si le dispositif de communication mobile (100) est accessible par l'une quelconque des picocellules (110, 605) du réseau de communication sans fil à courte portée ;
un moyen sur le système hôte qui, si le dispositif de communication mobile (100) est accessible par une première picocellule, est destiné à rediriger les données par le système hôte vers le dispositif de communication mobile, via le réseau de communication sans fil à courte portée et la première picocellule ; et
un moyen sur le système hôte qui, si le dispositif de communication mobile (100) n'est pas accessible via le réseau de communication sans fil à courte portée, est destiné à rediriger les données par le système hôte vers le dispositif de communication mobile (100) via un réseau de communication sans fil à longue portée.

6. Système selon la revendication 5, dans lequel les données sont constituées d'au moins un des éléments suivants : appels téléphoniques, messages de courriel, calendrier, événements, avis de réunions, rubriques d'adresse, rubriques de journal et rappels personnels.

7. Système selon la revendication 5, dans lequel les informations de contact indiquent la position physique du dispositif de communication mobile.

8. Système selon la revendication 5, comprenant en outre un moyen destiné à déterminer si le dispositif de communication mobile n'est plus en communication avec la première picocellule et a établi un contact avec une seconde picocellule parmi la pluralités de picocellules et, si tel est le cas, à rediriger les données vers le dispositif de communication mobile (100) via le réseau de communication sans fil à courte portée et la seconde picocellule.

9. Application logicielle de redirection, pouvant fonctionner sur un système hôte, afin de rediriger des données entre le système hôte (120, 225) et un dispositif de communication mobile (100), l'application logicielle de redirection comprenant :
des instructions destinées à recevoir des informations de contact intéressant le dispositif de communication mobile provenant d'un réseau de communication sans fil à courte portée qui comprend une pluralité de picocellules, si le dispositif de communication mobile établit le contact avec une picocellule considérée et si le dispositif de communication mobile n'est plus en communication avec le réseau de communication sans fil à courte portée ;
des instructions destinées, à la suite de la réception des informations de contact, à écrire les informations de contact dans un profil d'utilisateur associé au dispositif de communication mobile ;
des instructions destinées, à la suite de réception de données pour un utilisateur du dispositif de communication mobile, à déterminer si le dispositif de communication mobile (100) est accessible par l'une quelconque des picocellules (110, 605) du réseau de communication sans fil à courte portée ;
des instructions destinées, si le dispositif de communication mobile (100) est accessible par une première picocellule, à rediriger les données par le système hôte vers le dispositif de communication mobile (100), via le réseau de communication sans fil à courte portée et la première picocellule ; et
des instructions destinées, si le dispositif de communication mobile (100) n'est pas accessible via le réseau de communication sans fil à courte portée, à rediriger les données par le système hôte vers le dispositif de communication mobile (100) via un réseau de communication sans fil à longue portée.

10. Application logicielle de redirection selon la revendication 9, dans laquelle les données sont constituées d'au moins un des éléments suivants : appels téléphoniques, messages de courriel, calendrier, événements, avis de réunions, rubriques d'adresse, rubriques de journal et rappels personnels.

11. Application logicielle de redirection selon la revendication 9, dans laquelle les informations de contact indiquent la position physique du dispositif de communication mobile.

12. Application logicielle de redirection selon la revendication 9, comprenant en outre des instructions destinées à déterminer si le dispositif de communication mobile n'est plus en communication avec la première picocellule et a établi un contact avec une seconde picocellule parmi la pluralité de picocellules et, si tel et le cas, à rediriger les données vers le dispositif de communication mobile (100) via le réseau de communication sans fil à courte portée et la seconde picocellule.

13. Application logicielle de redirection selon la revendication 9, comprenant en outre des instructions, exécutées avant l'envoi des données, destinée à déterminer si les données doivent être acheminées vers le dispositif de communication mobile.
